(19) Europäisches Patentamt
European Patent Office
Office européen des brevets

(11) **EP 1 419 693 B1**

(12) **EUROPEAN PATENT SPECIFICATION**

(45) Date of publication and mention of the grant of the patent:
**12.09.2007 Bulletin 2007/37**

(21) Application number: **02755661.2**

(22) Date of filing: **25.07.2002**

(51) Int Cl.:
*A01N 43/50* (2006.01)          *A01N 43/80* (2006.01)

(86) International application number:
**PCT/JP2002/007560**

(87) International publication number:
**WO 2003/011029 (13.02.2003 Gazette 2003/07)**

(54) **COMPOSITION FOR CONTROLLING PLANT PATHOGENIC BACTERIUM AND METHOD OF CONTROLLING PLANT PATHOGENIC BACTERIUM**

ZUSAMMENSETZUNG ZUR BEKÄMPFUNG VON PFLANZENPATHOGENEN BAKTERIEN UND VERFAHREN ZUR BEKÄMPFUNG VON PFLANZENPATHOGENEN BAKTERIEN

COMPOSITION PERMETTANT DE LUTTER CONTRE UNE BACTERIE PATHOGENE DE PLANTE ET PROCEDE DE LUTTE CONTRE LADITE BACTERIE PATHOGENE DE PLANTE

(84) Designated Contracting States:
**AT BE BG CH CY CZ DE DK EE ES FI FR GB GR IE IT LI LU MC NL PT SE SK TR**

(30) Priority: **30.07.2001 JP 2001229351**

(43) Date of publication of application:
**19.05.2004 Bulletin 2004/21**

(73) Proprietor: **ISHIHARA SANGYO KAISHA, LTD. Osaka-shi, Osaka 550-0002 (JP)**

(72) Inventors:
• **MITANI, Shigeru,**
**Ishihara Sangyo Kaisha, Ltd.**
**Kusatsu-shi,**
**Shiga 525-0025 (JP)**
• **KAMACHI, Ken,**
**Ishihara Sangyo Kaisha, Ltd.**
**Kusatsu-shi,**
**Shiga 525-0025 (JP)**
• **YAMAGUCHI, Tomona,**
**Ishihara Sangyo Kaisha, Ltd.**
**Kusatsu-shi,**
**Shiga 525-0025 (JP)**
• **OHTA, Hiroshi,**
**Sankyo Company, Limited**
**Yasu-gun,**
**Shiga 520-2342 (JP)**
• **TAMAGAWA, Hiromi**
**Yasu-gun,**
**Shiga 520-2342 (JP)**

(74) Representative: **von Kreisler, Alek et al**
**Deichmannhaus am Dom,**
**Postfach 10 22 41**
**50462 Köln (DE)**

(56) References cited:
**EP-A- 0 337 103**          **WO-A-98/48628**
**JP-A- 11 005 706**

**Description**

FIELD OF THE INVENTION

The present invention relates to a phytopathogenic microorganism-controlling composition having markedly enhanced disinfecting effects on phytopathogenic microorganisms, particularly curative and/or preventive effects on plant and soil diseases caused by phytopathogenic microorganisms, said phytopathogenic microorganism-controlling composition which is useful as an agricultural and/or horticultural agent, and to a method for controlling phytopathogenic microorganisms using the phytopathogenic microorganism-controlling composition.

BACKGROUND OF THE INVENTION

JP, A, 1-131163 (1989) discloses that the imidazole compounds represented by the formula (I) (hereinafter described) are useful as harmful bio-organism-controlling agents, also referring to the possibility of using said imidazole compound in admixture or combination with other fungicides if desired. JP, A, 11-5706 (1999) discloses a composition for controlling harmful bio-organisms comprising the aforementioned imidazole compound in admixture with a spreader as an activity-enhancing ingredient, referring the possibility of using the harmful bio-organism controlling composition in admixture with an isoxazole compound. There is, however, neither embodiment nor specific indication for the combination of the isoxazole compound with the aforementioned imidazole compound in these prior art documents.

Although the isoxazole compounds exert high microbiocidal activity on various phytopathogens, particular cases such as severe cases wherein a disease remarkably occurs require them to produce much higher activity against specific phytopathogens such as Pythium and Aphanomyces. On the other hand, the imidazole compounds of formula (I) (hereinafter described) sometimes produce insufficient microbiocidal efficacy on certain phytopathogens or relatively short duration in their residual activity. Therefore, application cases are met with insufficient disinfecting efficacy on the phytopathogens in practical uses. From this aspect, an improvement is still needed.

SUMMARY OF THE INVENTION

The present invention relates to a disinfecting composition for controlling phytopathogenic microorganisms which comprises

    (a) an effective amount of hymexazole, and
    (b) 4-chloro-2-cyano-1-diemethylsulfamoyl-5-(4-methylphenyl) imidazole,

wherein the weight ratio of the (a) to (b) ranges from 1:300 to 300:1.
The present invention also relates to a method for controlling phytopathogenic microorganisms which comprises applying the phytopathogenic microorganism-disinfecting composition onto phytopathogenic microorganisms.
The present inventors have carried out an extensive research in order to solve the aforementioned problems. As a result, the present inventors have succeeded in discovering that the co-application of the aforementioned imidazole compound in admixture with the phytopathogenic microorganism-disinfectant isoxazole compound exhibits unexpectedly and remarkably excellent disinfecting efficacy on phytopathogenic microorganisms as compared to the sole application of each compound, and thus completed this invention.

BEST MODES FOR CARRYING OUT THE INVENTION

Described below are detailed embodiments of the present invention.
The aforementioned hymexazole is 5-methylisoxazol-3-ol (ISO common name: Hymexazol).
The imidazole compound the present invention is 4-chloro-2-cyano-1-dimethylsulfamoyl-5-(4-methylphenyl) imidazole (Compound No. 1).
The imidazole compound can be prepared by known processes disclosed, e.g., in JP, A, 1-131163 (1989); EP-A-705823.
The disinfecting compositions for controlling phytopathogenic microorganisms which comprises (a) an effective amount of one disinfectant isoxazole compound and (b) an effective amount of at least one imidazole compound of formula (I) exert excellently advantageous microbicidal activities on crop plants which have been infected, or suspected of being infected, with harmful pathogenic bio-organisms, when applied to said crop plants wherein the crop plants include food plants and ornamental plants, for example, vegetables (e.g., cucumbers, tomatoes, eggplants, watermelons, spinaches, onions, sweet peppers (green peppers), Chinese cabbages, komatsuna (Japanese mustard spinach), pumpkins, squashes, edible gingers, etc.); cereal crops (e.g., rice, wheat, etc.); beans (e.g., soybean, Aduki bean (small red bean), etc.); fruits or orchards (e.g., melons, grapes, citrus, etc.); lawns; potatoes; sugar beets; tobaccos; seedlings or juvenile plants for timbers; flowering plants (e.g., carnations, cyclamen, iris, chrysanthemums, etc.), and the like. The phytopathogenic microorganism-disinfecting compositions are preferably effective in combating and/or eliminating soil diseases (e.g., damping-off of seedlings, etc.) caused by phytopathogenic microorganisms, such as Pythium, Fusariurm, Aphanomyces, Rhizopus, Rhizoctonia, and Trichoderma; damages and diseases including late blight downy mildew; etc. The phytopathogenic microorganism-disinfecting compositions also have excellent curative and/or preventive effects on soil-borne diseases (e.g., wilt, clubroot, white mold (Southern blight, stem rot), etc.) caused by phytopathogenic microorganisms, such as Verticillium, Plasmodiophora, and Corticium.

The disinfecting compositions for controlling phytopathogenic microorganisms according to the present invention have a prolonged residual action and exhibit an excellent preventive property. It is therefore possible to control diseases by seed disinfection. Since the disinfecting compositions also have an excellent curative effect, it is possible to combat and/or eliminate diseases by treatment after infection. Further, the disinfecting compositions have penetrating, permeating and migrating properties. It is therefore possible to control diseases of stems and/or leaves by soil treatments.

The disinfecting compositions for controlling phytopathogenic microorganisms according to the present invention have specifically curative and/or preventive actions on diseases such as late blight of potatoes, sweet peppers, watermelons, pumpkins, squashes, tobaccos, and tomatoes; Shiroiro-eki-byo (white tip) of onions; brown rot of watermelons; downy mildew of cucumbers, melons, cabbages, Chinese cabbages, onions, and grapes; soil-borne diseases (e.g., damping-off of rice, beets, lawns, etc.) caused by phytopathogenic microorganisms, such as Pythium, Fusariurm, Aphanomyces, Rhizopus, Rhizoctonia, and Trichoderma; soil-borne diseases (e.g., wilt, clubroot, white mold, etc.) caused by phytopathogenic microorganisms, such as Verticillium, Plasmodiophora, and Corticium. Among them, the disinfecting compositions are remarkably and unexpectedly effective in combating and/or eliminating soil-borne diseases caused by Pythium and Aphanomyces.

The plural active ingredients which constitute the disinfecting compositions for controlling phytopathogenic microorganisms according to the present invention can be formulated into a variety of forms, including dusts, wettable powders, wettable granules, emulsifiable concentrates, aqueous solutions, suspension concentrates, etc., in admixture with various adjuvants, as in conventional agricultural-preparations. The isoxazole compound and the imidazole compound of formula (I) may be mixed and formulated, or each of them may be separately formulated and then mixed together. Upon use, the preparation may be used as such or as diluted with an appropriate diluent such as water, to a predetermined concentration. The adjuvants as used herein include carriers, emulsifying agents, suspending agents, thickeners, dispersants, spreaders, wetting agents, penetrating agents, antifreezing agents, antifoaming agents, etc. These adjuvants are added appropriately according to necessity.

In the disinfecting compositions for controlling phytopathogenic microorganisms according to the present invention, the weight ratio of (a) hymexazole to (b) the imidazole compound is 1:300 to 300:1, preferably 1:100 to 100:1, most preferably 1:5 to 50:1.

The present invention also encompasses a method for controlling phytopathogenic microorganisms which comprises applying the phytopathogenic microorganism-disinfecting composition of the present invention onto phytopathogenic microorganisms.

In using the disinfecting compositions for controlling phytopathogenic microorganisms, the application concentrations of the active ingredients used cannot be generally defined because they vary depending on, for example, the target crop plant to be treated, the method of treatment, the preparation form, the amount of the preparation to be applied, the timing of treatment, the particular harmful phytopathogenic microorganism species, etc. For example, the isoxazole compound is usually used at a concentration ranging from 0.01 to 1,000 ppm, preferably from 0.5 to 500ppm, and the imidazole compound of formula (I) is used at a concentration ranging from 0.01 to 1,000 ppm, preferably from 0.3 to 500 ppm. For amounts of,the active ingredients to be applied, the disinfecting composition is sprinkled, sprayed, dusted or placed at an amount sufficient for providing the isoxazole compound at a dose rate of 10 to 50,000 g/ha and the imidazole compound at a dose rate of 10 to 10,000 g/ha.

Described below are preferred embodiments of the disinfecting composition for controlling phytopathogenic microorganisms according to the present invention which are provided only for illustrative purposes but not to limit the scope of the present invention.

(1) A method for combating and/or eliminating a variety of soil-borne diseases which comprises applying to phytopathogenic microorganisms a phytopathogenic microorganism-disinfecting composition comprising at least one isoxazole compound and at least one compound of formula (I) as active components.

(2) The method for combating and/or eliminating a variety of soil-borne diseases according to the above (1) wherein the phytopathogenic microorganism is at least one selected from the group consisting of Pythium, Fusariurm, Aphanomyces, Rhizopus, Rhizoctonia, Trichoderma, Verticillium, Plasmodiophora, and Corticium.

(3) The method for combating and/or eliminating a variety of soil-borne diseases according to the above (1) wherein the phytopathogenic microorganism is at least one selected from the group consisting of Pythium, Fusariurm, Aphanomyces, Rhizopus, Rhizoctonia, and Trichoderma.

(4) The method for combating and/or eliminating a variety of soil-borne diseases according to the above (1) wherein the phytopathogenic microorganism is at least one selected from the group consisting of Verticillium, Plasmodiophora, and Corticium.

(5) The method for combating and/or eliminating a variety of soil-borne diseases according to the above (1) wherein the phytopathogenic microorganism is at least one selected from the group consisting of Pythium and Aphanomyces.

(6) A method for combating and/or eliminating damping-off of rice, beets, and lawns with a phytopathogenic microorganism-disinfecting composition which comprises at least one isoxazole compound and at least one compound of formula (I) as active components.

In accordance with the present invention, sites or circumstances wherein a phytopathogenic microorganism will occur or has occurred are treated with (A) one isoxazole compound and (B) at least one compound of formula (I) wherein said sites or circumstances include soil, plants, irrigating water, etc. and each of the ingredients (A) and (B) is applied at an effective dose for controlling (including combating and eliminating) phytopathogenic microorganisms. Thus, such methods for controlling phytopathogenic microorganisms are provided. The method of the present invention may be either prophylactic or therapeutic. The application can be conducted by treating soil, or plants, or treatments on phytopathogens. The plant treatment may include seed treatments, seedling or juvenile plant treatments, treatments on leaves, foliage, stems, stalks, flowers, flower buds, leaf buds, etc. The composition can be applied prior to or after transplantation or emergence. The present invention also provides use of at least one selected from the isoxazole compounds and at least one selected from the compounds of formula (I) for producing a Phytopathogenic microorganism-controlling composition which comprises at least one of said isoxazole compounds in combination with at lease one of the compounds of formula (I) as active components.

Examples, etc.

Described below are examples, including test examples, and formulation examples, of the present invention which are provided only for illustrative purposes, and not to limit the scope of the present invention. All the examples, etc. were carried out or can be carried out, unless otherwise disclosed herein specifically, by standard techniques which are well known and conventional to those skilled in the art.

The following examples are to illustrate the present invention in a detailed manner.

Described below are test examples which are given with regard to the present invention but intended not to limit the scope of the present invention.

Test Example 1

Antimicrobial Test (Phytopathogenic Microorganism)

Each sample fungal flora pre-cultured in PSA medium was cut from the medium plate with a cork borer, and placed on a center of PSA medium containing each test compound at a predetermined concentration, dispensed in a Petri dish with an inner diameter of 8 cm. Immediately thereafter, the dish was allowed to stand in a thermostatic room set at 20°C. The diameters of the flora zones were measured after 2 day incubation. A mycelial growth rate is calculated according to the following equation. The results are shown in Tables 1 and 2.

$$\text{Mycelial growth rate (\%)} = \frac{a}{b} \times 100$$

a : diameter of treated fungus floras
b : diameter of non-treated fungus floras

A theoretically expected value can be calculated according to the following formula derived from the so-called Colby's formula. In cases where an observed value is lower than the theoretically expected one obtained from the formula derived from the Colby's formula, the phytopathogenic microorganism-disinfecting composition of' the present invention is synergistically effective in combating and/or eliminating phytopathogenic microorganisms In these cases, each theoretically expected value obtained from the formula derived from the Colby's formula is shown in parentheses in Tables 1 and 2.

$$\text{Theoretically expected value (\%)} = \frac{(X \times Y)}{100}$$

X : Mycelial growth rate (%) when treated with Compound No. 1 alone
Y : Mycelial growth rate (%) when treated with Hymexazol alone

## TABLE 1

| Compound No. 1 Hymexazol | Pythium aphanidermatum Mycelial Growth Rate (%) (Theoretically Expected Value) | | | |
|---|---|---|---|---|
| | 100 ppm | 50 ppm | 25 ppm | 0 ppm |
| 100 ppm | 0(0.6) | 0(0.4) | 0(1.3) | 6.3 |
| 50 ppm | 0(1.5) | 0(1.0) | 0(3.5) | 16.4 |
| 25 ppm | 0(2.1) | 0(1.4) | 0(4.8) | 22.7 |
| 0 ppm | 9.4 | 6.3 | 21.1 | 100 |

Remark:

The diameter of non-treated Pythium floras is 64.0 mm.

## TABLE 2

| Compound No. 1 Hymexazol | Pythium spinosum Mycelial Growth Rate (%) (Theoretically Expected Value) | | | |
|---|---|---|---|---|
| | 100 ppm | 50 ppm | 25 ppm | 0 ppm |
| 100 ppm | 0(0.5) | 0(2.2) | 0(3.4) | 23.7 |
| 50 ppm | 0(0.4) | 0(2.0) | 0(3.1) | 21.6 |
| 25 ppm | 0(0.6) | 0(2.6) | 0(4.0) | 27.8 |
| 0 ppm | 2.1 | 9.3 | 14.4 | 100 |

Remark:

The diameter of non-treated Pythium floras is 48.5 mm.

Test Example 2

Test for Prophylactic Efficacy against Pythium Damping-off Disease of Rice Seedlings (1)

Polyvinyl chloride cups (each 10 cm square) were filled with pathogen-inoculated soil as bed soil, and seeded with rice seeds. Next, the polyvinyl chloride cup was irrigated using a pipette with a test solution (27.8 ml) prepared by adjusting each active ingredient compound to a predetermined concentration, and then covered with soil. After kept for 3 days in a thermostatic room set at 32°C, the plants were grown in a greenhouse. Ten days after sowing, the plants were exposed to a cold temperature during night. Twenty nine days after sowing, the disease incidence area was examined. The results are shown in Table 3. In these cases, each theoretically expected value obtained from the aforementioned formula derived from the Colby's formula is shown in parentheses in Table 3

TABLE 3

| Compound No. 1 / Hymexazol | Damping-off Incidence Area Rate (%) (Theoretically Expected Value) | |
|---|---|---|
| | 278 g/ha | 0 g/ha |
| 1,040 g/ha | 0 (34) | 50 |
| 0 g/ha | 67 | 83 |

Test Example 3

Test for Prophylactic Efficacy against Pythium Damping-off Disease of Rice Seedlings (2)

AS resin cases (each 15x11 cm) were filled with pathogen-inoculated soil as bed soil, and seeded with rice seeds. Next, the AS resin case was irrigated using a pipette with a test solution (50 ml) prepared by adjusting each active ingredient compound to a predetermined concentration, and then covered with soil. After kept for 3 days in a thermostatic room set at 32°C, the plants were grown in a greenhouse. Ten days after sowing, the plants were exposed to a cold temperature during night for 3 days. Thirty five days after sowing, the disease incidence area was examined. The results are shown in Table 4. In these cases, each theoretically expected value obtained from the aforementioned formula derived from the Colby's formula is shown in parentheses in Table 4.

## TABLE 4

| Compound No. 1 / Hymexazol | Damping-off Incidence Area Rate (%) (Theoretically Expected Value) | |
|---|---|---|
| | 139 g/ha | 0 ppm |
| 1,040 g/ha | 0 (45) | 90 |
| 0 g/ha | 50 | 90 |

Test Example 4

Antimicrobial Test (Phytopathogenic Microorganism)

Each sample fungal flora pre-cultured in PSA medium was cut from the medium plate with a cork borer, and placed on a center of PSA medium containing each test compound at a predetermined concentration, dispensed in a Petri dish with an inner diameter of 8 cm. Immediately thereafter, the dish was allowed to stand in a thermostatic room set at 20°C. The diameters of the flora zones excluding the placed flora were measured after 3 day incubation for Aphanomyces cochlioides (MAFF No. 305548) and after 1 day incubation for Pythium debaryanum (MAFF No. 305462), respectively. A mycelial growth rate (%) is calculated according to the same equation as in Test Example 1. The results are shown in Tables 5 and 6.

A theoretically expected value can be calculated according to the same formula derived from the Colby's formula, as in Test Example 1. In cases where an observed value is lower than the theoretically expected one derived from the Colby's formula, the phytopathogenic microorganism-disinfecting composition of the present invention is synergistically effective in combating and/or eliminating phytopathogenic microorganisms. In these cases, each theoretically expected value derived from the Colby's formula is shown in parentheses in Tables 5 and 6.

## TABLE 5

| Compound No. 1 / Hymexazol | Aphanomyces cochlioides Mycelial Growth Rate (%) (Theoretically Expected Value) | | | |
|---|---|---|---|---|
| | 100 ppm | 50 ppm | 25 ppm | 0 ppm |
| 100 ppm | 0 (5) | 7 (12) | 11 (22) | 43 |
| 50 ppm | 0 (5) | 4 (12) | 15 (22) | 43 |
| 25 ppm | 0 (6) | 4 (15) | 15 (28) | 53 |
| 0 ppm | 11 | 29 | 52 | 100 |

Remark:

The diameter of non-treated Aphanomyces floras is 46.0 mm.

## TABLE 6

| Compound No. 1 / Hymexazol | Pythium debaryanum Mycelial Growth Rate (%) (Theoretically Expected Value) | | | |
|---|---|---|---|---|
| | 100 ppm | 50 ppm | 25 ppm | 0 ppm |
| 100 ppm | 19(29) | 23(33) | 21(40) | 67 |
| 50 ppm | 20(37) | 27(41) | 31(50) | 84 |
| 25 ppm | 24(39) | 34(44) | 42(53) | 89 |
| 0 ppm | 44 | 49 | 59 | 100 |

Remark:

The diameter of non-treated Pythium floras is 45.5 mm.

The formulation examples are intended to illustrate the disinfecting compositions of the present invention but not to limit the scope of this invention.

Formulation Example 1

| | | | |
|---|---|---|---|
| (1) | Hymexazol | 5 parts by weight |
| (2) | Compound No.1 | 4 parts by weight |
| (3) | Dispersant NK FS-71 (trade name; Takemoto Oil & K.K.) | 1 part by weight |
| (4) | Dispersing and suspending agent Veegum | 1 part by weight |
| (5) | Antifoaming agent Rhodosil 432 (trade name; Rhodia Nicca Ltd.) | 0.1 part by weight |
| (6) | Propylene glycol | 10 parts by weight |
| (7) | Water | 78.9 parts by weight |

The above components (1) to (7) were mixed and wet pulverized until the active ingredient had an average particle diameter of about $4 \mu m$ to prepare an aqueous suspension product.

Formulation Example 2

| | | | |
|---|---|---|---|
| (1) | Hymexazol | 5 parts by weight |
| (2) | Compound No.1 | 4 parts by weight |
| (3) | Kaolin | 49 parts by weight |
| (4) | Hydrated amorphous silicon dioxide | 15 parts by weight |
| (5) | Polyoxyethylene stylyl ether sulfate ammonium salt | 2 parts by weight |

The above components were mixed uniformly to obtain a wettable powder product.

Formulation Example 3

| | | | |
|---|---|---|---|
| (1) | Hymexazol | 4 parts by weight |
| (2) | Compound No.1 | 0.5 part by weight |
| (3) | Talc | 95.5 parts by weight |

The above components were mixed uniformly to obtain a dust product.

Formulation Example 4

| | | | |
|---|---|---|---|
| (1) | Hymexazol | 4 parts by weight |
| (2) | Compound No.1 | 0.5 part by weight |
| (3) | Bentonite | 30 parts by weight |
| (4) | Kaolin | 60.5 parts by weight |
| (5) | Sodium lignin sulfate | 5 parts by weight |

The above components were mixed together with an adequate amount of water sufficient for granulation, followed by granulation and drying to obtain a granule product.

Formulation Example 5

| | | |
|---|---|---|
| (1) | Hymexazol | 30 parts by weight |
| (2) | Compound No.1 | 4 parts by weight |
| (3) | Sodium chloride | 46 parts by weight |
| (4) | Bentonite | 10 parts by weight |
| (5) | Polyoxyethylene stylyl ether sulfate ammonium salt | 10 parts by weight |

The above components were mixed together, placed in a high-speed mixing granulator, to which an adequate amount of water was added and the mixture was granulated and dried to form a wettable granule product.

Formulation Example 6

| | | |
|---|---|---|
| (1) | Hymexazol | 15 parts by weight |
| (2) | Compound No.1 | 2 parts by weight |
| (3) | Xylene | 23 parts by weight |
| (4) | N-Methyl-2-pyrrolidone | 40 parts by weight |
| (5) | Polyoxyethylene alkyl aryl ether | 20 parts by weight |

The above components were mixed together, and dissolved to obtain an emulsifiable concentrate.

Formulation Example 7

| | | |
|---|---|---|
| (1) | Hymexazol | 30 parts by weight |
| (2) | Compound No.1 | 4 parts by weight |
| (3) | Hexane | 55 parts by weight |
| (4) | Polyoxyethylene phenylphenol derivative and polyoxyethylene sorbitan alkylate mixture | 10 parts by weight |
| (5) | Organic bentonite | 1 part by weight |

The above components were mixed together, and micronized to obtain a suspension concentrate.

INDUSTRIAL APPLICABILITY

The disinfecting compositions for controlling phytopathogenic microorganisms according to the present invention exert stably and highly curative and/or preventive actions on crop plants suffering from plant diseases caused by phytopathogenic microorganisms, and can combat and/or eliminate the phytopathogenic microorganisms.

**Claims**

1. A composition for controlling phytopathogenic microorganisms which comprises

    (a) an effective amount of hymexazole, and
    (b) 4-chloro-2-cyano-1-dimethylsulfamoyl-5-(4-methylphenyl) imidazole,

    wherein the weight ratio of the (a) to (b) ranges from 1:300 to 300:1.

2. A method for controlling phytopathogenic microorganisms which comprises applying the phytopathogenic microorganism-controlling composition according to claim 1 onto phytopathogenic microorganisms.

3. The method according to claim 2, wherein the phytopathogenic microorganism-controlling composition is applied at an amount sufficient for providing hymexazole at a dose rate ranging from 10 to 50,000 g/ha and 4-chloro-2-cyano-1-dimethylsulfamoyl-5-(4-methylphenyl)imidazole at a dose rate ranging from 10 to 10,000 g/ha.

4. The method according to claim 2 or 3, wherein the phytopathogenic microorganism is a phytopathogenic microorganism which causes damping-off of seedling.

**Patentansprüche**

1. Zusammensetzung zur Bekämpfung von phytopathogenen Mikroorganismen, die

    (a) eine wirksame Menge Hymexazol und
    (b) 4-Chlor-2-cyano-1-dimethylsulfamoyl-5-(4-methylphenyl)imidazol

    umfasst, wobei das Gewichtsverhältnis von (a) zu (b) im Bereich von 1:300 bis 300:1 liegt.

2. Verfahren zur Bekämpfung von phytopathogenen Mikroorganismen, das das Auftragen der phytopathogene Mikroorganismen bekämpfenden Zusammensetzung gemäß Anspruch 1 auf phytopathogene Mikroorganismen umfasst.

3. Verfahren gemäß Anspruch 2, wobei die phytopathogene Mikroorganismen bekämpfende Zusammensetzung in einer Menge aufgetragen wird, die ausreicht, um Hymexazol in einer Dosis im Bereich von 10 bis 50 000 g/ha und 4-Chlor-2-cyano-1-dimethylsulfamoyl-5-(4-methylphenyl)imidazol in einer Dosis im Bereich von 10 bis 10 000 g/ha zuzuführen.

4. Verfahren gemäß Anspruch 2 oder 3, wobei der phytopathogene Mikroorganismus ein phytopathogener Mikroorganismus ist, der die Umfallkrankheit bei einem Keimling verursacht.

**Revendications**

1. Composition pour le contrôle de microorganismes phytopathogènes qui comprend

    (a) une quantité efficace d'hymexazole, et
    (b) du 4-chloro-2-cyano-1-diméthylsulfamoyl-5-(4-méthylphényl)imidazole,

    dans laquelle le rapport en poids de (a) à (b) varie de 1 : 300 à 300 : 1.

**2.** Procédé pour le contrôle de microorganismes phytopathogènes qui comprend l'application de la composition pour le contrôle de microorganismes phytopathogènes selon la revendication 1 à des microorganismes phytopathogènes.

**3.** Procédé selon la revendication 2, dans lequel la composition pour le contrôle de microorganismes phytopathogènes est appliquée à une quantité suffisante pour fournir de l'hymexazole à un taux de dose variant de 10 à 50 000 g/ha et du 4-chloro-2-cyano-1-diméthylsulfamoyl-5-(4-méthylphényl)imidazole à un taux de dose variant de 10 à 10 000 g/ha.

**4.** Procédé selon la revendication 2 ou 3, dans lequel le microorganisme phytopathogène est un microorganisme phytopathogène qui provoque la fonte des semis.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1131163 A
- JP 11005706 A

- EP 705823 A